(19) Europäisches Patentamt
European Patent Office
Office européen des brevets

(11) **EP 4 685 717 A1**

(12) **EUROPEAN PATENT APPLICATION**

(43) Date of publication:
**28.01.2026 Bulletin 2026/05**

(21) Application number: 25190388.6

(22) Date of filing: **18.07.2025**

(51) International Patent Classification (IPC):
**G06Q 10/063** (2023.01)  **G06Q 30/0201** (2023.01)

(52) Cooperative Patent Classification (CPC):
**G06Q 10/063; G06Q 30/0206**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.07.2024 IN 202421056404**

(71) Applicant: **Tata Consultancy Services Limited Maharashtra (IN)**

(72) Inventors:
• **PATI, Biswanath**
  **751024 Bhubaneswar, Odisha (IN)**
• **KUMAR, Hareesh**
  **600017 Chennai, Tamil Nadu (IN)**
• **MUKHERJEE, Jayanta**
  **700091 Kolkata, West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR DYNAMIC TIME WINDOW BASED POINT ELASTICITY CALCULATION FOR RETAIL MERCHANDISE**

(57)     The embodiments of the present disclosure herein address unresolved problems of elasticity calculation through a dynamic multi window approach. Embodiments herein provide a method and system for a dynamic time window-based point elasticity calculation for a retail merchandise. The system is configured for forming different time windows and an average demand of each window is used to calculate point elasticities. It is assumed that the market has an inherent delay in responding to price changes. But time to respond is unknown and that also varies from product to product, market to market and season to season basis. So, a few demand points are left before and after the price change. Again, the size of the window is also set to different values, to get the effect of price change in different timescales, so that at the final stage, only the sustained and prominent shifts in average demand prevail.

FIG. 2A

take

leave

Before
window

After window

Point of price change

**FIG. 2B**

take

leave

Before
window

After window

Point of price change

**FIG. 2C**

take

leave

**After window**

**Before window**

**Point of price change**

**FIG. 2D**

take

leave

**After window**

**Before window**

**Point of price change**

**FIG. 2F**

**Description**

CROSS-REFERENCE TO RELATED APPLICATIONS AND PRIORITY

The present application claims priority to Indian application no. 202421056404, filed on July 24, 2024.

TECHNICAL FIELD

The disclosure herein generally relates to the field of retail merchandising, and more particularly, a method and system for a dynamic time window-based point elasticity calculation for a retail merchandise.

BACKGROUND

Price elasticity of demand is a very important subject which calculates the change in demand of a product with respect to a change in price of the product. The subject is very important for the retailers as the retailers try to manipulate the price using the elasticity to achieve a desired level of demand for the product. Elasticity also plays a crucial role in determining the optimal price of a product. However, price elasticity is also one of the most difficult items to calculate accurately.

Usually, customers are sensitive to the price of the product. If the price is reduced, the demand rises and vice versa (leaving the demonstrative good). Retailers are always in pursuit to find a way to calculate the accurate elasticity for every SKU so that they can manipulate the price of the SKUs to drive the demand and set an optimal price for every SKU or forecast demand so that they can do proper supply chain management.

Conventionally, a regression line is fitted between the price and demand to calculate the elasticity and use that elasticity to forecast future demand. However, it considers every price and demand pair and not just the price and demand combination that is relevant for elasticity calculation. Usually there is a gap between the price change of the product and response of demand to that price change. Different products have different "variable window" or "time lag" before demand is stabilized in response to a price change. FMCG products like Milk or Bread may see an immediate spike in demand to a fall in price while other groceries may have several weeks of delay before demand responds to the price falls.

Traditionally people don't consider this variable time lag window and they take the entire duration between two price change date into consideration for calculating elasticity. The demand for any product varies every day and any price change may not result in a shift in demand. Calculating elasticity at these price points (where demand shift is not significant) results in inaccurate elasticity calculation.

SUMMARY

Embodiments of the present disclosure present technological improvements as solutions to one or more of the above-mentioned technical problems recognized by the inventors in conventional systems. For example, in one embodiment, a method for a dynamic time window-based point elasticity calculation for a retail merchandise is provided. The processor-implemented method includes receiving, via an Input/Output (I/O) interface, information of a plurality of daily historical sales volumes of a product in a sequence of days, a plurality of daily historical price values of the product in a sequence of days, and a plurality of price change points, and preprocessing the received information of daily historical sales volumes of the product by imputing one or more missing days of the sequence of days to generate a contiguous sales volume.

Further, the processor-implemented method includes aggregating a week wise demand data point to obtain a weekly demand data point from the generated contiguous sales volumes. Furthermore, the processor-implemented method includes preprocessing the received historical price values, and the plurality of price change points to identify a triplet of week number, a before price and an after price, estimating a hidden periodicity in the weekly demand data points using a Fourier transformation of a weekly demand curve and selecting one or more predefined Fourier coefficients to identify a period of seasonality, wherein the period of seasonality can be zero if falls outside a predefined range in terms of the number of weeks.

Further, the processor-implemented method includes generating a plurality of pairs of leave-take windows around each of the one or more price change points, determining a before-demand average as the numerical average of the demand data points falls within the before window and an after-demand average as the numerical average of the demand data points falls within the after window, and determining a demand shift as the numerical difference between before-demand average and after-demand average, within each of the plurality of generated leave-take windows. A dynamic leave-take window considers different time gaps before finalizing the leave-take window for elasticity calculation. Each of the plurality of pairs of windows comprises of a 'before' and an 'after' window, each of which have a number of demand data points defined by the 'take' value. The after window contains 'take' number of demand data points starting from week number of the price change plus the 'leave' value. Depending on period of seasonality, before window contains 'take' number of demand data points ending at week number of the price change minus the 'leave' value, for zero period of seasonality, and 'take' number of demand data points starting from week number of the price change minus period of seasonality plus the 'leave' value, for non-zero period of seasonality

Furthermore, the processor-implemented method includes identifying at least one valid leave-take window of the plurality of leave-take windows based on the calculated demand shift which is greater than twice of a standard deviation of the demand data points, calculating a point elasticity for each of the one or more price change points of the identified at least one valid leave-take window:

$$point\ elasticity = \frac{logU_2 - logU_1}{logP_2 - logP_1}$$

where $U_1$= before average demand, $U_2$= after average demand, $P_1$= before price and $P_2$= after price.

Furthermore, the processor-implemented method includes calculating a point elasticity error for each of the one or more price change points of the identified at least one valid leave-take window, wherein an average point elasticity error of the least standard deviation chain is determined as a final elasticity error:

$$point\ elasticity\ error = \frac{1}{\sqrt{N}(logP_2 - logP_1)}\left(\frac{STD\ U_2}{U_2} + \frac{STD\ U_1}{U_1}\right)$$

where $U_1$= before average demand, $U_2$= after average demand, $P_1$= before price, $P_2$= after price, STD=standard deviation, log=logarithm and N=number of demand data points within a leave or take window.

Furthermore, the processor-implemented method includes identifying a plurality of chains taking at least one point elasticity from each price change point, determining a standard deviation of the set of point elasticities in each of the plurality of chains identified, and identifying at least one chain of the plurality of chains with a minimum standard deviation. Finally, the processor-implemented method includes calculating an average of the set of point elasticities of the least standard deviation chain as a final constant elasticity and calculating an average of the errors of the set of point elasticities of the least standard deviation chain as a final constant elasticity error.

In another embodiment, a system for a dynamic time window-based point elasticity calculation for a retail merchandise is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive information of a plurality of daily historical sales volumes of a product in a sequence of days, a plurality of daily historical price values of the product in a sequence of days, and a plurality of price change points. The one or more hardware processors are configured by the instructions to preprocess the received information of daily historical sales volumes of the product by imputing one or more missing days of the sequence of days to generate a contiguous sales volume.

Further, the one or more hardware processors are configured by the instructions to aggregate a week wise demand data point to obtain a weekly demand data point from the generated contiguous sales volumes. Furthermore, the one or more hardware processors are configured by the instructions to pre-process the received historical price values, and the plurality of price change points to identify a triplet of week number, a before price and an after price, estimating a hidden periodicity in the weekly demand data points using a Fourier transformation of a weekly demand curve and selecting one or more predefined Fourier coefficients to identify a period of seasonality, wherein the period of seasonality can be zero if falls outside a predefined range in terms of the number of weeks.

Further, the one or more hardware processors are configured by the instructions to generate a plurality of pairs of leave-take windows around each of the one or more price change points, determine a before-demand average as the numerical average of the demand data points falls within the before window and an after-demand average as the numerical average of the demand data points falls within the after window, and determine a demand shift as the numerical difference between before-demand average and after-demand average, within each of the plurality of generated leave-take windows. A dynamic leave-take window considers different time gaps before finalizing the leave-take window for elasticity calculation. Each of the plurality of pairs of windows comprises of a 'before' and an 'after' window, each of which have a number of demand data points defined by the 'take' value. The after window contains 'take' number of demand data points starting from week number of the price change plus the 'leave' value. Depending on period of seasonality, before window contains 'take' number of demand data points ending at week number of the price change minus the 'leave' value, for zero period of seasonality, and 'take' number of demand data points starting from week number of the price change minus period of seasonality plus the 'leave' value, for non-zero period of seasonality.

Furthermore, the one or more hardware processors are configured by the instructions to identify at least one valid leave-take window of the plurality of leave-take windows based on the calculated demand shift which is greater than twice of a standard deviation of the demand data points and calculate a point elasticity for each of the one or more price change points of the identified at least one valid leave-take window:

$$point\ elasticity = \frac{logU_2 - logU_1}{logP_2 - logP_1}$$

where $U_1$= before average demand, $U_2$= after average demand, $P_1$= before price and $P_2$= after price.

Furthermore, the one or more hardware processors are configured by the instructions to calculate a point elasticity error for each of the one or more price change points of the identified at least one valid leave-take window, wherein an average point elasticity error of the least standard deviation chain is determined as a final elasticity error:

$$point\ elasticity\ error = \frac{1}{\sqrt{N}(logP_2 - logP_1)}\left(\frac{STD\ U_2}{U_2} + \frac{STD\ U_1}{U_1}\right)$$

where $U_1$= before average demand, $U_2$= after average demand, $P_1$= before price, $P_2$= after price, STD=standard deviation, log=logarithm and N=number of demand data points within a leave or take window.

Furthermore, the one or more hardware processors are configured by the instructions to identify a plurality of chains taking at least one point elasticity from each price change point, determine a standard deviation of the set of point elasticities in each of the plurality of chains identified, and identify at least one chain of the plurality of chains with a minimum standard deviation. Finally, the one or more hardware processors are configured by the instructions to calculate an average of the set of point elasticities of the least standard deviation chain as a final constant elasticity and calculate an average of the errors of the set of point elasticities of the least standard deviation chain as a final constant elasticity error.

In yet another aspect, there are provided one or more non-transitory machine-readable information storage mediums comprising one or more instructions, which when executed by one or more hardware processors causes a method for a dynamic time window-based point elasticity calculation for a retail merchandise is provided. The processor-implemented method includes receiving, via an Input/Output (I/O) interface, information of a plurality of daily historical sales volumes of a product in a sequence of days, a plurality of daily historical price values of the product in a sequence of days, and a plurality of price change points, and preprocessing the received information of daily historical sales volumes of the product by imputing one or more missing days of the sequence of days to generate a contiguous sales volume.

Further, the processor-implemented method includes aggregating a week wise demand data point to obtain a weekly demand data point from the generated contiguous sales volumes. Furthermore, the processor-implemented method includes preprocessing the received historical price values, and the plurality of price change points to identify a triplet of week number, a before price and an after price, estimating a hidden periodicity in the weekly demand data points using a Fourier transformation of a weekly demand curve and selecting one or more predefined Fourier coefficients to identify a period of seasonality, wherein the period of seasonality can be zero if falls outside a predefined range in terms of the number of weeks.

Further, the processor-implemented method includes generating a plurality of pairs of leave-take windows around each of the one or more price change points, determining a before-demand average as the numerical average of the demand data points falls within the before window and an after-demand average as the numerical average of the demand data points falls within the after window, and determining a demand shift as the numerical difference between before-demand average and after-demand average, within each of the plurality of generated leave-take windows. A dynamic leave-take window considers different time gaps before finalizing the leave-take window for elasticity calculation. Each of the plurality of pairs of windows comprises of a 'before' and an 'after' window, each of which have a number of demand data points defined by the 'take' value. The after window contains 'take' number of demand data points starting from week number of the price change plus the 'leave' value. Depending on period of seasonality, before window contains 'take' number of demand data points ending at week number of the price change minus the 'leave' value, for zero period of seasonality, and 'take' number of demand data points starting from week number of the price change minus period of seasonality plus the 'leave' value, for non-zero period of seasonality

Furthermore, the processor-implemented method includes identifying at least one valid leave-take window of the plurality of leave-take windows based on the calculated demand shift which is greater than twice of a standard deviation of the demand data points, calculating a point elasticity for each of the one or more price change points of the identified at least one valid leave-take window:

$$point\ elasticity = \frac{logU_2 - logU_1}{logP_2 - logP_1}$$

where $U_1$= before average demand, $U_2$= after average demand, $P_1$= before price and $P_2$= after price.

Furthermore, the processor-implemented method includes calculating a point elasticity error for each of the one or more price change points of the identified at least one valid leave-take window, wherein an average point elasticity error of the least standard deviation chain is determined as a final elasticity error:

$$point\ elasticity\ error = \frac{1}{\sqrt{N}(logP_2 - logP_1)}\left(\frac{STD\ U_2}{U_2} + \frac{STD\ U_1}{U_1}\right)$$

where $U_1$= before average demand, $U_2$= after average demand, $P_1$= before price, $P_2$= after price, STD=standard deviation, log=logarithm and N=number of demand data points within a leave or take window.

Furthermore, the processor-implemented method includes identifying a plurality of chains taking at least one point elasticity from each price change point, determining a standard deviation of the set of point elasticities in each of the plurality of chains identified, and identifying at least one chain of the plurality of chains with a minimum standard deviation. Finally, the processor-implemented method includes calculating an average of the set of point elasticities of the least standard deviation chain as a final constant elasticity and calculating an average of the errors of the set of point elasticities of the least standard deviation chain as a final constant elasticity error.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of a system for a dynamic time window-based point elasticity calculation for a retail merchandise, according to some embodiments of the present disclosure.

FIG. 2A through 2F is a schematic diagram illustrating the system of FIG. 1 for a dynamic time window-based point elasticity calculation for a retail merchandise, according to some embodiments of the present disclosure. FIG. 2A through 2C is illustrating same 'take'' value but different "leave" values. Whereas FIG. 2D through 2F is illustrating same "leave" value but different "take" values.

FIG. 3A through 3D is an exemplary flow diagram illustrating a processor-implemented method for a dynamic time window-based point elasticity calculation for a retail merchandise, according to some embodiments of the present disclosure.

FIG. 4 is a schematic diagram illustrating formation of sample leave-take window pair around a sample point of price change in the non-seasonal case, according to some embodiments of the present disclosure.

FIG. 5 is a schematic diagram illustrating formation of sample leave-take window pair around a sample point of price change in the seasonal case, according to some embodiments of the present disclosure.

FIG. 6A through 6B is a schematic diagram illustrating the concept of significant demand shift and how it is related to the value of "leave", according to some embodiments of the present disclosure.

FIG. 7 is a schematic diagram illustrating the formation of chains and selection of the chain with minimal standard deviation of calculated point elasticities, according to some embodiments of the present disclosure.

FIG. 8A through 8B is a schematic diagram illustrating the geometric explanation of how minimal standard deviation of elasticities implies the best final constant elasticity, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

This disclosure pertains broadly to the realm of a price elasticity through a dynamic multi window approach. Manipulating the price using the elasticity to achieve a desired level of demand for the product is an important subject for retailers. However, price elasticity is also one of the most difficult items to calculate accurately. Herein, the disclosure provides the price elasticity of demand using a multi window-based point elasticity calculation that seems to be working better for different products with dynamic window than a traditional method that uses standardized single window-based elasticity calculation.

Embodiments herein provide a method and system for a dynamic time window-based point elasticity calculation for a retail merchandise. The system is configured for forming different time windows and an average demand of each window is used to calculate point elasticities. While generating windows, the concept of "leave" and "take" is used. It is assumed that the market has an inherent delay in responding to the price changes. But the "time to respond" is unknown and that also varies in "product to product", "market to market" and "season to season" basis. So, a few demand points are left before and after the price change, which is governed by a changing the number named "leave". Again, the size of window, which is governed by the number "take" is also set to different values, to get effect of price change in different timescales, so that at the final stage, only the sustained and prominent shifts in "average demand" prevail.

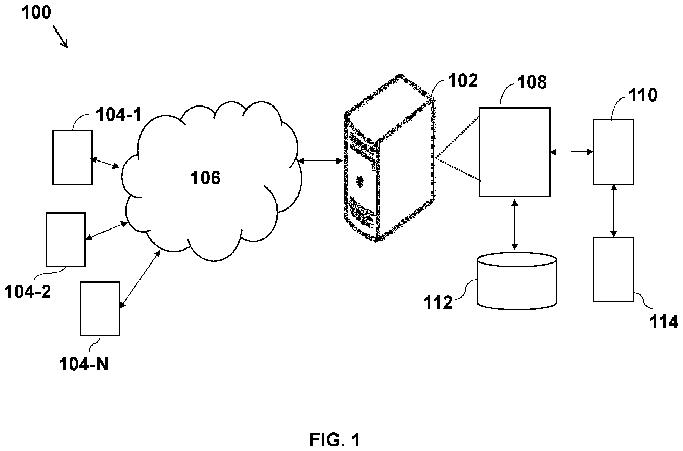

Referring now to the drawings, and more particularly to FIG. 1 through FIG. 8B, where similar reference characters denote corresponding features consistently throughout the figures, there are shown preferred embodiments, and these embodiments are described in the context of the following exemplary system and/or method.

FIG. 1 illustrates a block diagram of a system 100 for a dynamic time window-based point elasticity calculation for a retail merchandise, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It may be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH®, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

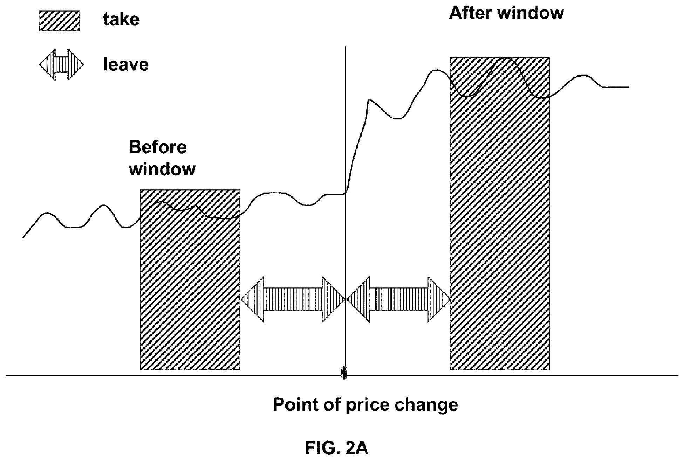

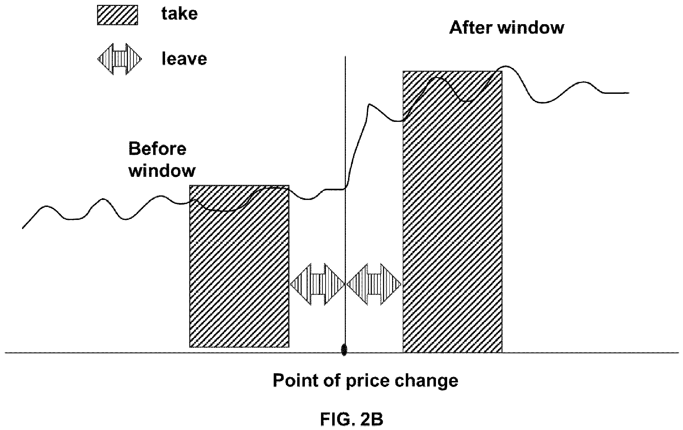

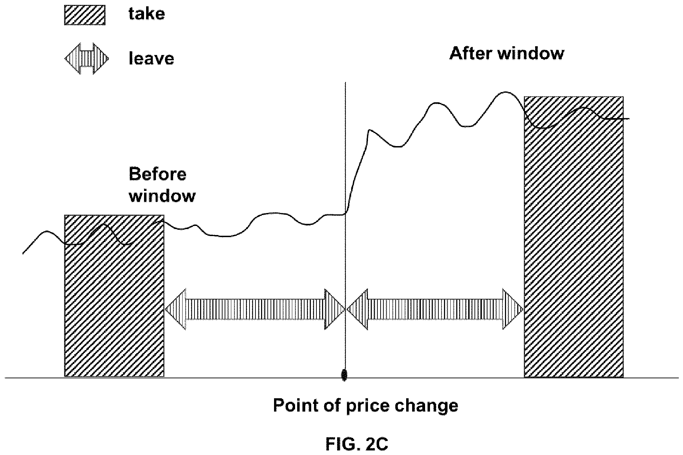

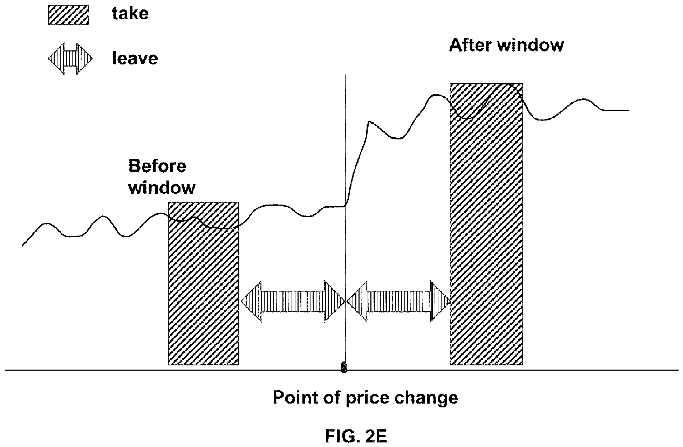

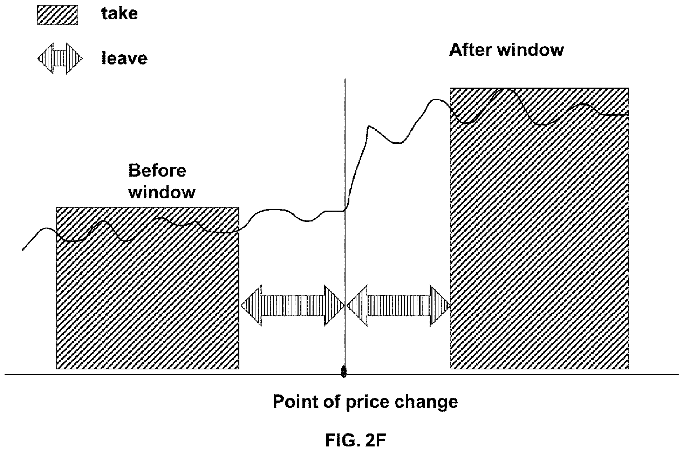

FIG. 2A through 2F are schematic diagrams 200 to illustrate generation of different dynamic time windows of different sizes around each price change, according to some embodiments of the present disclosure. From historical price data, one or more points of price change are identified. Around each price change point, at least one "leave-take" window is formed. The term "leave" means the number of data points to be left/ignored before or after the point of price change. Whereas term "take" means how many data points need to be taken in a window.

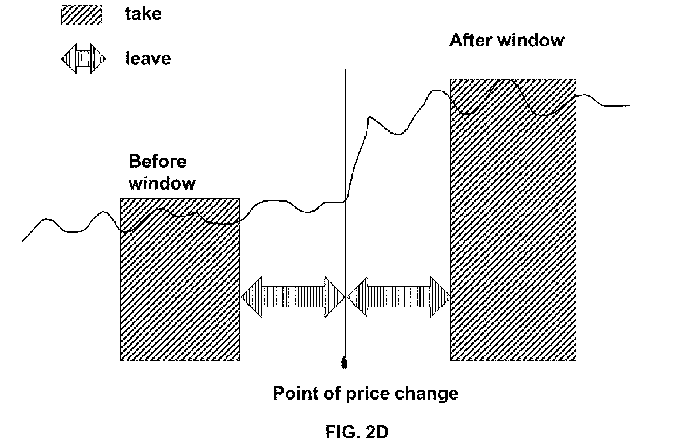

In one example, wherein around each point of price change, several "leave-take" windows are formed such as "L2-T2", "L2-T3", "L2-T4", "L3-T2", "L3-T3", "L4-T2", "L4-T3", "L4-T4" etc. Where "$Lm$-$Tn$" means "Leave $m$ data points, then take n data points to form the window. FIG. 2A through 2C depicts the combinations where different "leave" values were taken keeping "take" value the same, whereas FIG. 2D through 2F depicts the combinations where different "take" values were taken keeping "leave" value the same. If the product/commodity/SKU does not have any prominent periodicity in sales, then it is called to be non-seasonal and if there is some prominent periodicity it is a seasonal. Similarly, for seasonal product/commodity/SKUs, several numbers of "leave-take" windows are formed. The only difference is how the "before" windows are formed. In this case, for a given "leave-take", the "before" window is formed by moving "one season" backwards and then leaving "leave" number of data points in the forward direction of time.

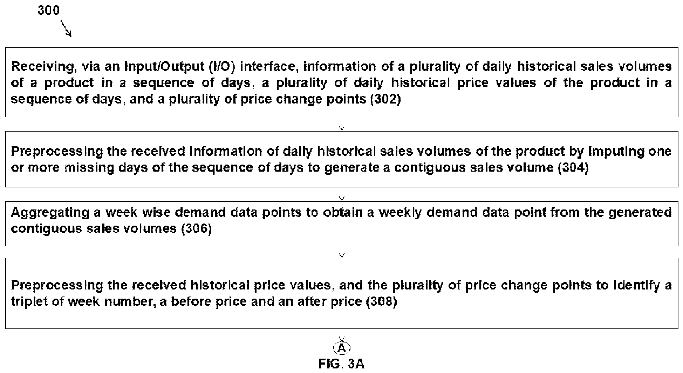

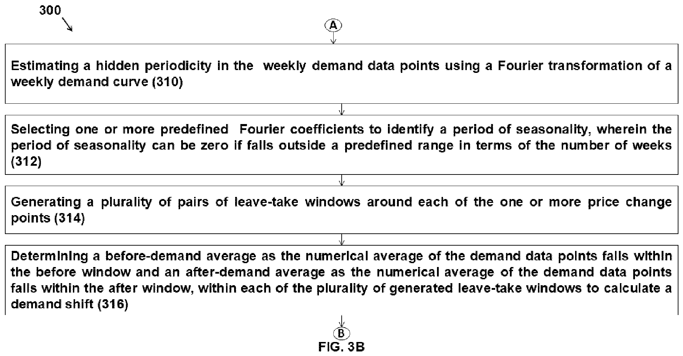

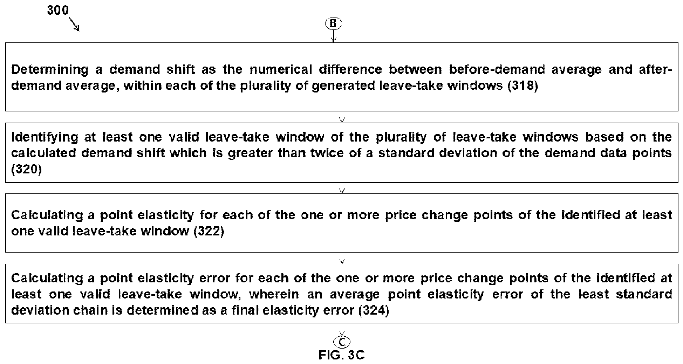

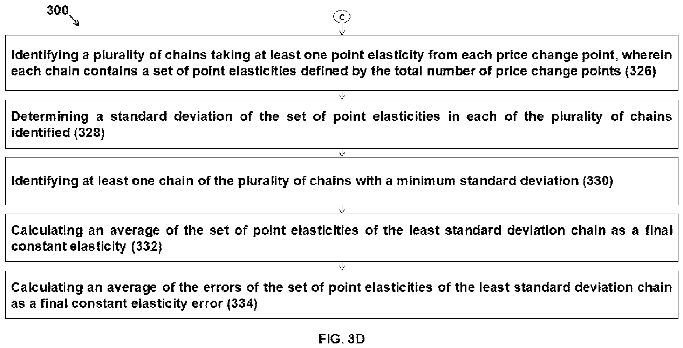

FIG. 3A through 3D is a flow diagram illustrating a processor-implemented method 300 for a dynamic time window-based point elasticity calculation for a retail merchandise implemented by the system 100 of FIG. 1, in accordance with an embodiment of the present disclosure. Functions of the components of the system 100 are now explained through steps of flow diagram in FIG. 3, according to some embodiments of the present disclosure.

Initially, at step 302 of the processor-implemented method 300, the one or more hardware processors 108 are configured by the programmed instructions to receive, via an Input/Output (I/O) interface, information of a plurality of daily historical sales volumes of a product in a sequence of days, a plurality of daily historical price values of the product in a sequence of days, and a plurality of price change points.

At the next step 304 of the processor-implemented method 300, the one or more hardware processors 108 are configured by the programmed instructions to preprocess the received information of daily historical sales volumes of the product by imputing one or more missing days of the sequence of days to generate a contiguous sales volume. The missing sales data points are imputed using at least one interpolation scheme. The interpolation scheme includes a linear, a polynomial, a spline, and a nearest neighbor.

At the next step 306 of the processor-implemented method 300, the one or more hardware processors 108 are configured by the programmed instructions to aggregate a week wise demand data point to obtain a weekly demand data point from the generated contiguous sales volumes. The dynamic leave-take window considers different time gaps before finalizing the leave-take window for elasticity calculation.

At the next step 308 of the processor-implemented method 300, the one or more hardware processors 108 are configured by the programmed instructions to preprocess the received historical price values, and the plurality of price change points to identify a triplet of week number, a before price and an after price.

At the next step 310 of the processor-implemented method 300, the one or more hardware processors 108 are configured by the programmed instructions to estimate a hidden periodicity in the weekly demand data points using a Fourier transformation of a weekly demand curve.

At the next step 312 of the processor-implemented method 300, the one or more hardware processors 108 are configured by the programmed instructions to select one or more predefined Fourier coefficients to identify a period of seasonality. The period of seasonality can be zero if falls outside a predefined range in terms of the number of weeks.

At the next step 314 of the processor-implemented method 300, the one or more hardware processors 108 are configured by the programmed instructions to generate a plurality of pairs of leave-take windows around each of the one or more price change points. The generated plurality of pairs of windows are of different sizes in terms of weeks, based on a combination of at least one minimum and at least one maximum value of a leave and take window respectively. Each of the plurality of pairs of windows comprises of a 'before' and an 'after' window, each of which have a number of demand data points defined by the 'take' value. The after window contains 'take' number of demand data points starting from week number of the price change plus the 'leave' value.

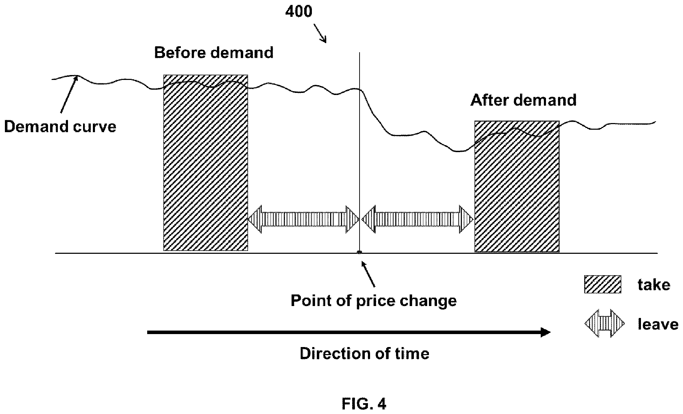

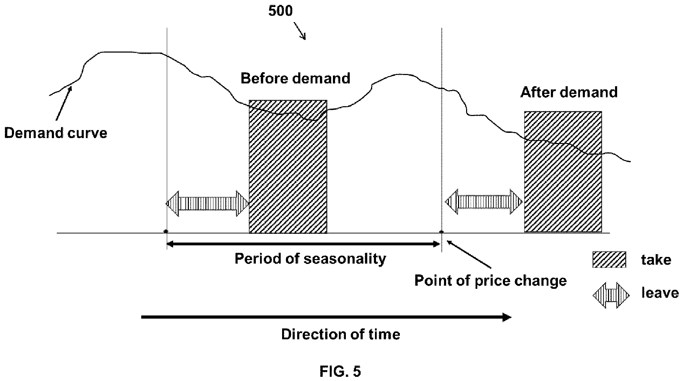

At the next step 316 of the processor-implemented method 300, the one or more hardware processors 108 are configured by the programmed instructions to determine a before-demand average as the numerical average of the demand data points falls within the before window and an after-demand average as the numerical average of the demand data points falls within the after window, within each of the plurality of generated leave-take windows to calculate a demand shift. The positioning of the before-demand average and the after-demand average varies according to presence of non-zero period of seasonality of demand. Depending on period of seasonality, before window contains 'take' number of demand data points ending at week number of the price change minus the 'leave' value, for zero period of seasonality, and 'take' number of demand data points starting from week number of the price change minus period of seasonality plus the 'leave' value, for non-zero period of seasonality. FIG. 4 is a schematic diagram 400 illustrating formation of sample leave-take window pair around a sample point of price change in the non-seasonal case, according to some embodiments of the present disclosure. FIG. 4 depicts how "before" and "after" windows are generated for non-seasonal case. Whereas FIG. 5, a schematic diagram 500 illustrating formation of sample leave-take window pair around a sample point of price change in the seasonal case, depicts how "before" and "after" windows are generated for seasonal case.

At the next step 318 of the processor-implemented method 300, the one or more hardware processors 108 are configured by the programmed instructions to determine a demand shift as the numerical difference between before-demand average and after-demand average, within each of the plurality of generated leave-take windows.

At the next step 320 of the processor-implemented method 300, the one or more hardware processors 108 are configured by the programmed instructions to identify at least one valid leave-take window of the plurality of leave-take windows based on the calculated demand shift which is greater than twice of a standard deviation of the demand data points.

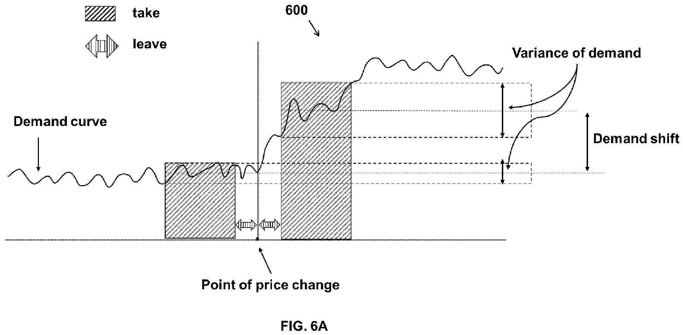

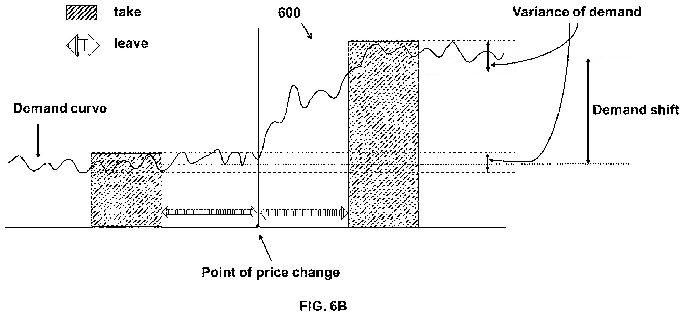

FIG. 6A through 6B is a schematic diagram 600 illustrating the concept of significant demand shift and how it is related to the value of "leave", according to some embodiments of the present disclosure. FIG. 6A shows that if "leave" value is too small, demand variance at before and after windows may be comparable to the demand shift. It is observed that variance of demands is comparable to demand shift. So, the demand shift is "Insignificant". FIG. 6B shows how a correct value of "leave" can point to the portions of demand curve where demand was steady after a price change. Again, it shows that how the demand shift if significantly greater than the demand variance at before and after windows leads to the perfect choice of "leave" value automatically. It is observed that the demand shift is greater than twice the demand variances. So, the demand shift is "Significant". From this it is claimed that if the demand shift is greater than twice the demand variance at before and after windows, the choice of leave-take is preferable than where it is not.

At the next step 322 of the processor-implemented method 300, the one or more hardware processors 108 are configured by the programmed instructions to calculate a point elasticity for each of the one or more price change points of the identified at least one valid leave-take window. The point elasticity is calculated as follows -

$$point\ elasticity = \frac{\log U_2 - \log U_1}{\log P_2 - \log P_1} \qquad (1)$$

where $U_1$ = before average demand, $U_2$ = after average demand, $P_1$ = before price and $P_2$ = after price.

At the next step 324 of the processor-implemented method 300, the one or more hardware processors 108 are configured by the programmed instructions to calculate a point elasticity error for each of the one or more price change points of the identified at least one valid leave-take window, wherein an average point elasticity error of the least standard deviation chain is determined as a final elasticity error. The point elasticity error is calculated as follows -

$$point\ elasticity\ error = \frac{1}{\sqrt{N}(\log P_2 - \log P_1)}\left(\frac{STD\ U_2}{U_2} + \frac{STD\ U_1}{U_1}\right) \qquad (2)$$

where $U_1$ = before average demand, $U_2$ = after average demand, $P_1$ = before price, $P_2$ = after price, STD=standard deviation, log=logarithm and N=number of demand data points within a leave or take window.

At the next step 326 of the processor-implemented method 300, the one or more hardware processors 108 are configured by the programmed instructions to identify a plurality of chains taking at least one point elasticity from each price change point, wherein each chain contains a set of point elasticities defined by the total number of price change points.

At the next step 328 of the processor-implemented method 300, the one or more hardware processors 108 are configured by the programmed instructions to determine a standard deviation of the set of point elasticities in each of the plurality of chains identified.

At the next step 330 of the processor-implemented method 300, the one or more hardware processors 108 are configured by the programmed instructions to identify at least one chain of the plurality of chains with a minimum standard deviation.

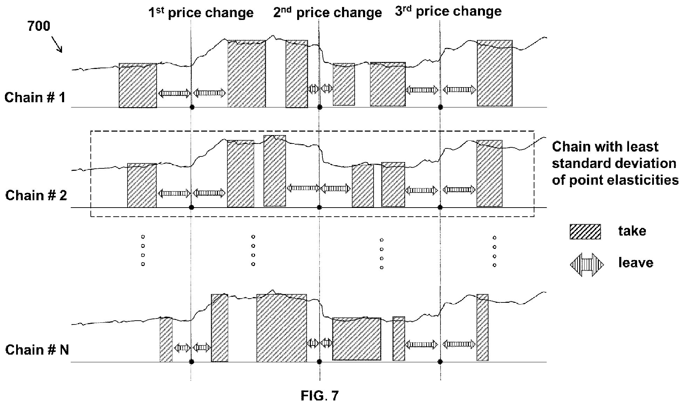

FIG. 7 is a schematic diagram 700 illustrating the formation of chains and selection of the chain with minimal standard deviation of calculated point elasticities, according to some embodiments of the present disclosure. FIG. 7 depicts how different chains will look like, for an example item with three price changes. It also shows one of the chains get selected on the basis of standard deviation of the point elasticities belong to that chain.

For example, there are total n price changes. For $i^{th}$ price change, there are $k_i$ different "leave-take" windows. So, there will be $\sum_i^n k_i$ different calculated point elasticities. But the price elasticity is an intrinsic constant of the product/commodity/SKU, there will be a single final elasticity of all these point elasticities. To do so, one point elasticity is taken from each price change and different chains are formed. So, there is in total $\prod_i^n k_i$ different chains are formed. In each such chain, there are $n$ number of point elasticities. The standard deviation of each chain is calculated. The chain with minimum standard deviation is selected. Intuitively, the chain with least standard deviation implies the "leave-take" combinations that produced the point elasticities of the chain were the most consistent ones. That also implies that those "leave-take" windows, automatically have considered the stabilized demand values around each price change.

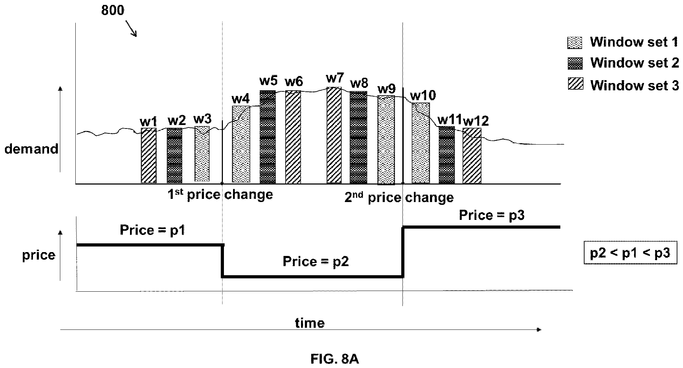

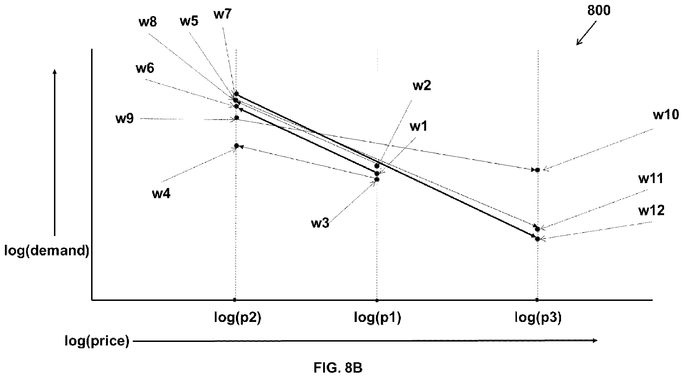

FIG. 8A through 8B is a schematic diagram 800 illustrating the geometric explanation of how minimal standard deviation of elasticities implies the best final constant elasticity, according to some embodiments of the present disclosure. In FIG. 8A, there are three sets of before and after window pairs with different "leave" values for simplicity. FIG. 8B shows points against each of the named windows w1 through w12 as labeled in FIG. 8A, in log (price) vs log (demand) graph. In the log space, slope of the line connecting a pair of before and after window, is as we know the point elasticity. It is observed that the (w1-w6) and (w7-w12) lines are almost parallel to each other. Elasticities, being the slope of these lines, are also almost equal for these two lines. So, the variance of point elasticities also will be minimal.

For example, in the window set 3, the lines for the two price changes are almost parallel to each other. That implies variance of the elasticities is also near to zero. Again, from the FIG. 8A it is evident that window set 3 is the set which contains the parts of the demand curve visibly stabilized. By stabilized it is observed that demand is not in a transient state, that is not increasing or decreasing. Thus from FIG. 8A and 8B, the implication of selecting the window set, which is a "chain" by our definition, is observed with minimum standard deviation of point elasticities.

At the next step 332 of the processor-implemented method 300, the one or more hardware processors 108 are configured by the programmed instructions to calculate an average of the set of point elasticities of the least standard deviation chain as a final constant elasticity.

Finally, at the last step 334 of the processor-implemented method 300, the one or more hardware processors 108 are configured by the programmed instructions to calculate an average of the errors of the set of point elasticities of the least standard deviation chain as a final constant elasticity error.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of elasticity calculation through a dynamic multi window approach. Manipulating the price using the elasticity to achieve a desired level of demand for the product is an important subject for retailers. However, price elasticity is also one of the most difficult items to calculate accurately. In the present disclosure, the method and system provide the price elasticity of demand using a multi window-based point elasticity calculation that seems to be working better for different products with dynamic window than a traditional method that uses standardized single window-based elasticity calculation.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development may change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) may be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300) comprising:

receiving (302), via an Input/Output (I/O) interface, information of a plurality of daily historical sales volumes of a product in a sequence of days, a plurality of daily historical price values of the product in the sequence of days, and a plurality of price change points;

preprocessing (304), via one or more hardware processors, the received information of daily historical sales volumes of the product by imputing one or more missing days of the sequence of days to generate a contiguous sales volume, wherein the missing sales data points are imputed using at least one interpolation scheme;

aggregating (306), via one or more hardware processors, a week wise demand data points to obtain a weekly demand data point from the generated contiguous sales volumes;

preprocessing (308), via the one or more hardware processors, the received historical price values, and the plurality of price change points to identify a triplet of week number, a before price and an after price;

estimating (310), via the one or more hardware processors, a hidden periodicity in the weekly demand data points using a predefined Fourier transformation of a weekly demand curve;

selecting (312), via the one or more hardware processors, one or more predefined Fourier coefficients to identify a period of seasonality, wherein the period of seasonality can be zero if falls outside a predefined range in terms of the number of weeks;

generating (314), via the one or more hardware processors, a plurality of pairs of leave-take windows around each of the one or more price change points, wherein the generated plurality of pairs of windows are of different sizes in terms of weeks, based on a combination of at least one minimum and at least one maximum value of a leave and take window respectively;

determining (316), via the one or more hardware processors, a before-demand average as the numerical average of the demand data points falling within a before window and an after-demand average as the numerical average of the demand data points falling within an after window, within each of the plurality of generated leave-take windows to calculate a demand shift, wherein positioning of the before-demand average and the after-demand average varies according to presence of non-zero period of seasonality of demand;

determining (318), via the one or more hardware processors, a demand shift as the numerical difference between the before-demand average and the after-demand average, within each of the plurality of generated leave-take windows;

identifying (320), via the one or more hardware processors, at least one valid leave-take window of the plurality of leave-take windows based on the calculated demand shift which is greater than twice of a standard deviation of the demand data points;

calculating (322), via the one or more hardware processors, a point elasticity for each of the one or more price change points of the identified at least one valid leave-take window;

calculating (324), via the one or more hardware processors, a point elasticity error for each of the one or more price change points of the identified at least one valid leave-take window, wherein an average point elasticity error of the least standard deviation chain is determined as a final elasticity error;

identifying (326), via the one or more hardware processors, a plurality of chains taking at least one point elasticity from each price change point, wherein each chain contains a set of point elasticities defined by the total number of price change points;

determining (328), via the one or more hardware processors, a standard deviation of the set of point elasticities in each of the plurality of chains identified;

identifying (330), via the one or more hardware processors, at least one chain of the plurality of chains with a minimum standard deviation;

calculating (332), via the one or more hardware processors, an average of the set of point elasticities of the least standard deviation chain as a final constant elasticity; and

calculating (334), via the one or more hardware processors, an average of the errors of the set of point elasticities of the least standard deviation chain as a final constant elasticity error.

2. The processor-implemented method (300) as claimed in claim 1, wherein the interpolation scheme includes a linear, a polynomial, a spline, and a nearest neighbor.

3. The processor-implemented method (300) as claimed in claim 1,

wherein the dynamic leave-take window considers different time gaps before finalizing the leave-take window for elasticity calculation;

wherein the after window contains 'take' number of demand data points starting from week number of the price change plus the 'leave' value; and

wherein depending on period of seasonality, the before window contains 'take' number of demand data points ending at week number of the price change minus the 'leave' value, for zero period of seasonality, and 'take' number of demand data points starting from week number of the price change minus period of seasonality plus the 'leave' value, for non-zero period of seasonality.

4. The processor-implemented method (300) as claimed in claim 1, wherein the point elasticity is calculated:

$$point\ elasticity = \frac{log U_2 - log U_1}{log P_2 - log P_1}$$

where $U_1$= before average demand, $U_2$= after average demand, $P_1$= before price and $P_2$= after price

5. The processor-implemented method (300) as claimed in claim 1, wherein the point elasticity error is calculated:

$$point\ elasticity\ error = \frac{1}{\sqrt{N}(log P_2 - log P_1)}\left(\frac{STD\ U_2}{U_2} + \frac{STD\ U_1}{U_1}\right)$$

where $U_1$= before average demand, $U_2$= after average demand, $P_1$= before price, $P_2$= after price, STD=standard deviation, log=logarithm and N=number of demand data points within a leave or take window.

6. A system (100) comprising:

an input/output interface (104) to receive a plurality of daily historical sales volumes in a sequence of days, of a product, a plurality of daily historical price values in the sequence of days, of the product and a plurality of price change points;
one or more hardware processors (108);
a memory (110) in communication with the one or more hardware processors (108), wherein the one or more hardware processors (108) are configured to execute programmed instructions stored in the memory to:

pre-process the received information by imputing daily historical sales volumes of one or more missing days of the sequence of days to generate a contiguous sales volume; wherein the missing sales data points are imputed using at least one interpolation scheme;
aggregate week wise demand data points to obtain weekly demand data points from the generated contiguous sales volumes;
pre-process the received historical price values, and the plurality of price change points, to identify a triplet of week number, a before price and an after price;
estimate a hidden periodicity in the weekly demand data points using a predefined Fourier transformation of a weekly demand curve;
select one or more predefined Fourier coefficients to identify a period of seasonality, wherein the period of seasonality can be zero if falls outside a predefined range in terms of the number of weeks;
generate a plurality of pairs of leave-take windows around each of the one or more price change points, wherein the generated plurality of pairs of windows are of different sizes in terms of weeks, based on a combination of at least one minimum and at least one maximum value of a leave and take respectively;
determine a before-demand average as the numerical average of the demand data points falling within a before window and an after-demand average as the numerical average of the demand data points falling within an after window, within each of the plurality of generated leave-take windows to calculate a demand shift, wherein positioning of the before-demand average and the after-demand average varies according to the presence of non-zero period of seasonality of demand;
determine a demand shift as the numerical difference between the before-demand average and the after-demand average, within each of the plurality of generated leave-take windows;
identify at least one valid leave-take window of the plurality of leave-take windows based on the calculated demand shift which is greater than twice of a standard deviation of the demand data points;
calculate a point elasticity for each of the one or more price change points of the identified at least one valid leave-take window;
calculate a point elasticity error for each of the one or more price change points of the identified at least one valid leave-take window, wherein an average point elasticity error of the least standard deviation chain is determined as a final elasticity error;
identify a plurality of chains taking at least one point elasticity from each price change point, wherein each chain contains a set of point elasticities defined by the total number of price change points;
determine a standard deviation of the set of point elasticities in each of the plurality of chains identified;
identify least one chain of the plurality of chains with a minimum standard deviation;
calculate an average of the set of point elasticities of the least standard deviation chain as a final constant elasticity; and
calculate an average of the errors of the set of point elasticities of the least standard deviation chain as a final constant elasticity error.

7. The system (100) as claimed in claim 6, wherein the interpolation scheme includes a linear, a polynomial, a spline, and a nearest neighbor.

8. The system (100) as claimed in claim 6,

wherein the dynamic leave-take window considers different time gaps before finalizing the leave-take window for elasticity calculation;
wherein the after window contains 'take' number of demand data points starting from week number of the price change plus the 'leave' value; and
wherein depending on period of seasonality, the before window contains 'take' number of demand data points ending at week number of the price change minus the 'leave' value, for zero period of seasonality, and 'take' number of demand data points starting from week number of the price change minus period of seasonality plus the 'leave' value, for non-zero period of seasonality.

9. The system (100) as claimed in claim 6, wherein the point elasticity is calculated:

$$point\ elasticity = \frac{logU_2 - logU_1}{logP_2 - logP_1}$$

where $U_1$= before average demand, $U_2$= after average demand, $P_1$= before price and $P_2$= after price

10. The system (100) as claimed in claim 6, wherein the point elasticity error is calculated:

$$point\ elasticity\ error = \frac{1}{\sqrt{N}(logP_2 - logP_1)}\left(\frac{STD\ U_2}{U_2} + \frac{STD\ U_1}{U_1}\right)$$

where $U_1$= before average demand, $U_2$= after average demand, $P_1$= before price, $P_2$= after price, STD=standard deviation, log=logarithm and N=number of demand data points within a leave or take window.

11. One or more non-transitory machine-readable information storage mediums comprising one or more instructions which when executed by one or more hardware processors cause:

receiving , via an Input/Output (I/O) interface, information of a plurality of daily historical sales volumes of a product in a sequence of days, a plurality of daily historical price values of the product in the sequence of days, and a plurality of price change points;
preprocessing , the received information of daily historical sales volumes of the product by imputing one or more missing days of the sequence of days to generate a contiguous sales volume, wherein the missing sales data points are imputed using at least one interpolation scheme;
aggregating , a week wise demand data points to obtain a weekly demand data point from the generated contiguous sales volumes;
preprocessing the received historical price values, and the plurality of price change points to identify a triplet of week number, a before price and an after price;
estimating a hidden periodicity in the weekly demand data points using a predefined Fourier transformation of a weekly demand curve;
selecting one or more predefined Fourier coefficients to identify a period of seasonality, wherein the period of seasonality can be zero if falls outside a predefined range in terms of the number of weeks;
generating a plurality of pairs of leave-take windows around each of the one or more price change points, wherein the generated plurality of pairs of windows are of different sizes in terms of weeks, based on a combination of at least one minimum and at least one maximum value of a leave and take window respectively;

determining a before-demand average as the numerical average of the demand data points falling within a before window and an after-demand average as the numerical average of the demand data points falling within an after window, within each of the plurality of generated leave-take windows to calculate a demand shift, wherein positioning of the before-demand average and the after-demand average varies according to presence of non-zero period of seasonality of demand;

determining a demand shift as the numerical difference between the before-demand average and the after-demand average, within each of the plurality of generated leave-take windows;

identifying at least one valid leave-take window of the plurality of leave-take windows based on the calculated demand shift which is greater than twice of a standard deviation of the demand data points;

calculating a point elasticity for each of the one or more price change points of the identified at least one valid leave-take window;

calculating a point elasticity error for each of the one or more price change points of the identified at least one valid leave-take window, wherein an average point elasticity error of the least standard deviation chain is determined as a final elasticity error;

identifying a plurality of chains taking at least one point elasticity from each price change point, wherein each chain contains a set of point elasticities defined by the total number of price change points;

determining a standard deviation of the set of point elasticities in each of the plurality of chains identified;

identifying at least one chain of the plurality of chains with a minimum standard deviation;

calculating an average of the set of point elasticities of the least standard deviation chain as a final constant elasticity; and

calculating an average of the errors of the set of point elasticities of the least standard deviation chain as a final constant elasticity error.

12. The one or more non-transitory machine-readable information storage mediums of claim **11,** wherein the interpolation scheme includes a linear, a polynomial, a spline, and a nearest neighbor.

13. The one or more non-transitory machine-readable information storage mediums of claim **11,**

wherein the dynamic leave-take window considers different time gaps before finalizing the leave-take window for elasticity calculation;

wherein the after window contains 'take' number of demand data points starting from week number of the price change plus the 'leave' value; and

wherein depending on period of seasonality, the before window contains 'take' number of demand data points ending at week number of the price change minus the 'leave' value, for zero period of seasonality, and 'take' number of demand data points starting from week number of the price change minus period of seasonality plus the 'leave' value, for non-zero period of seasonality.

14. The one or more non-transitory machine-readable information storage mediums of claim 11, wherein the point elasticity is calculated:

$$point\ elasticity = \frac{logU_2 - logU_1}{logP_2 - logP_1}$$

where $U_1$= before average demand, $U_2$= after average demand, $P_1$= before price and $P_2$= after price

15. The one or more non-transitory machine-readable information storage mediums of claim 11, wherein the point elasticity error is calculated:

$$point\ elasticity\ error = \frac{1}{\sqrt{N}(logP_2 - logP_1)}\left(\frac{STD\ U_2}{U_2} + \frac{STD\ U_1}{U_1}\right)$$

where $U_1$= before average demand, $U_2$= after average demand, $P_1$= before price, $P_2$= after price, STD=standard deviation, log=logarithm and N=number of demand data points within a leave or take window.

FIG. 1

take

leave

After window

Before
window

Point of price change

FIG. 2A

**FIG. 2B**

FIG. 2C

FIG. 2D

take

leave

After window

Before
window

Point of price change

FIG. 2E

take

leave

**After window**

**Before window**

**Point of price change**

**FIG. 2F**

EP 4 685 717 A1

300

Receiving, via an Input/Output (I/O) interface, information of a plurality of daily historical sales volumes of a product in a sequence of days, a plurality of daily historical price values of the product in a sequence of days, and a plurality of price change points (302)

Preprocessing the received information of daily historical sales volumes of the product by imputing one or more missing days of the sequence of days to generate a contiguous sales volume (304)

Aggregating a week wise demand data points to obtain a weekly demand data point from the generated contiguous sales volumes (306)

Preprocessing the received historical price values, and the plurality of price change points to identify a triplet of week number, a before price and an after price (308)

Ⓐ

FIG. 3A

23

300

(A)

Estimating a hidden periodicity in the weekly demand data points using a Fourier transformation of a weekly demand curve (310)

Selecting one or more predefined Fourier coefficients to identify a period of seasonality, wherein the period of seasonality can be zero if falls outside a predefined range in terms of the number of weeks (312)

Generating a plurality of pairs of leave-take windows around each of the one or more price change points (314)

Determining a before-demand average as the numerical average of the demand data points falls within the before window and an after-demand average as the numerical average of the demand data points falls within the after window, within each of the plurality of generated leave-take windows to calculate a demand shift (316)

(B)

FIG. 3B

300

Ⓑ

Determining a demand shift as the numerical difference between before-demand average and after-demand average, within each of the plurality of generated leave-take windows (318)

Identifying at least one valid leave-take window of the plurality of leave-take windows based on the calculated demand shift which is greater than twice of a standard deviation of the demand data points (320)

Calculating a point elasticity for each of the one or more price change points of the identified at least one valid leave-take window (322)

Calculating a point elasticity error for each of the one or more price change points of the identified at least one valid leave-take window, wherein an average point elasticity error of the least standard deviation chain is determined as a final elasticity error (324)

Ⓒ

FIG. 3C

300

©c

Identifying a plurality of chains taking at least one point elasticity from each price change point, wherein each chain contains a set of point elasticities defined by the total number of price change points (326)

Determining a standard deviation of the set of point elasticities in each of the plurality of chains identified (328)

Identifying at least one chain of the plurality of chains with a minimum standard deviation (330)

Calculating an average of the set of point elasticities of the least standard deviation chain as a final constant elasticity (332)

Calculating an average of the errors of the set of point elasticities of the least standard deviation chain as a final constant elasticity error (334)

FIG. 3D

**FIG. 4**

FIG. 5

FIG. 6A

FIG. 6B

FIG. 7

FIG. 8A

FIG. 8B

## EUROPEAN SEARCH REPORT

Application Number

EP 25 19 0388

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 372 656 A1 (TATA CONSULTANCY SERVICES LTD [IN]) 22 May 2024 (2024-05-22) * abstract; claims 1-15; figures 1-7 * * paragraphs [0005] - [0010], [0014] - [0065] * | 1-15 | INV. G06Q10/063 G06Q30/0201 |
| X | WO 2022/251079 A1 (EVERSIGHT INC [US]) 1 December 2022 (2022-12-01) * abstract; claims 1-20; figures 1-20b * * paragraphs [0025] - [0029], [0059] - [0186] * | 1-15 | |
| X | US 2020/104771 A1 (POPESCU CATALIN [US] ET AL) 2 April 2020 (2020-04-02) * abstract; claims 1-20; figures 1-8 * * paragraphs [0010], [0020] - [0130] * | 1-15 | |
| X | US 2005/234718 A1 (OUIMET KENNETH J [US] ET AL) 20 October 2005 (2005-10-20) * paragraphs [0019] - [0022], [0033] - [0085] * | 1-15 | |

TECHNICAL FIELDS
SEARCHED      (IPC)

G06Q

The present search report has been drawn up for all claims

| Place of search | Date of completion of the search | Examiner |
|---|---|---|
| The Hague | 27 October 2025 | Streit, Stefan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 0388

This annex lists the patent family members relating to the patent documents cited in  the above-mentioned European search report.
The members are as contained in the European Patent Office EDP file on
The European Patent Office is in no way liable for these particulars which are merely given for the purpose of information.

27-10-2025

| Patent document cited in search report | Publication date | Patent family member(s) | Publication date |
|---|---|---|---|
| EP 4372656    A1 | 22-05-2024 | EP      4372656 A1<br>US   2024202760 A1 | 22-05-2024<br>20-06-2024 |
| WO 2022251079  A1 | 01-12-2022 | NONE | |
| US 2020104771  A1 | 02-04-2020 | NONE | |
| US 2005234718  A1 | 20-10-2005 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421056404